# EUROPEAN PATENT SPECIFICATION

(11) **EP 1 564 159 B1**
(45) Date of publication and mention of the grant of the patent: **23.04.2008**
(21) Application number: 05425078.2
(22) Date of filing: 17.02.2005
(51) Int. Cl.: B65F 1/00, B65F 1/12

(54) **A unit for separately collecting urban waste**
Vorrichtung zum getrennten Sammeln von Stadtabfällen
Dispositif pour collecter séparément des déchets urbains

(30) Priority: 17.02.2004 IT bo20040075
(43) Date of publication of application: 17.08.2005
(73) Proprietor: AETNA GROUP S.p.A., 47827 Villa Verucchio (Rimini) (IT)
(72) Inventor: Cere, Mauro, 40050 LOIANO (Bologna) (IT)
(74) Representative: Lanzoni, Luciano

(56) References cited:
- EP-A- 0 600 808
- EP-A- 0 654 424
- EP-A- 1 074 486
- EP-A- 1 382 550
- WO-A-91/13010
- DE-A1- 4 340 857
- US-A- 2 602 584
- US-B1- 6 427 585

## Description

This invention relates to a waste collection unit, and in particular, a unit for collecting different types of urban waste separately, for compacting each different type of waste and packing it in sealed packages.

It is common knowledge that today's way of life in the industrialised world leads to the production of vast quantities of waste every day and the management of this waste poses considerable problems.

In large cities and small towns alike, the storage and disposal of all this waste have become matters of great social concern. As time goes on, landfills are less and less capable of receiving more waste, while incinerators are inadequate and too small to cope with the increasingly large volumes of waste, with the added problem that not all types of waste are suitable for incineration.

To overcome these problems, there has recently been new interest in recycling systems. Recycling significantly reduces the volumes of waste that end up in landfills and helps preserve stocks of raw materials, with evident economic advantages.

To facilitate separate collection of waste, which greatly simplifies the recycling of reclaimable materials, various devices have been devised to help users in the home separate domestic waste.

One of the main problems connected with separate collection is the need for a large number of containers for all the different types of waste.

The optimisation of space is therefore the prime objective of these devices, which have a number of separate compartments designed to receive different types of waste.

The compartments are, however, usually small and quick to fill. To reduce the frequency with which they have to be emptied, they are normally equipped with compacting and/or shredding devices that reduce the volume occupied by the waste.

United States patent 5,172,630 describes a waste storage system equipped with a plurality of separate compartments in which the waste is compacted.

More particularly, each compartment is designed to accommodate a specific type of waste previously separated and placed inside it by the user.

Patent EP-0686579 also describes a device for separately collecting urban waste. The device consists of a container that is subdivided into separate baskets, each designed to receive a particular type of waste. The baskets can be removed for emptying.

The device also has compressing and storage means for compacting the waste inside the baskets.

These prior art devices, however, present some disadvantages due, in particular, to the difficulty of emptying the containers.

To empty it, the container must be removed from the device and its contents tipped into a waste bin, usually an awkward operation that presents some difficulties.

It is also known from EP-654424, corresponding to the preamble of claim 1, an assembly for selective collecting and transporting of refuse, comprising a parallelepiped enclosure having two compartments inside it so that waste, according to its nature and/or its destination or treatment to receive, is laid in ore or the other compartment. Each compartment is equipped with a conveyor belt for convey the waste present therein towards outside.

The two compartments are superimposed one on the other, and a horizontal plate between them is movable upwards and downwards for compressing waste and reducing its dimensions. The horizontal plate can also be swivelled for put the upper and the lower compartment in communication and make waste drop from the upper compartment toward the lower.

The present invention therefore has for an object to overcome the above mentioned drawback by providing a unit for separately collecting urban waste in which the waste can easily be removed from the containers.

Another object of the invention is to provide a unit for separately collecting urban waste in which the waste is packed in a form that is easy to transport to the waste bins.

The aforementioned aims are achieved by the unit of invention as defined by claim 1.

The advantages of the invention will become more apparent from the following detailed description provided by way of example with reference to the accompanying drawings which illustrate a preferred, non-restricting embodiment of the invention and in which:
- Figure 1 is a schematic perspective view of a unit for separately collecting urban waste according to the present invention;
- Figures 2, 3, 4, 5 and 6 are schematic side views, with some parts cut away and others in cross section for clarity, of different containers forming part of the unit of Figure 1;
- Figures 7 to 10 are scaled-up side views schematically representing certain parts of the waste collection unit according to the invention in a sequence of waste treatment steps.

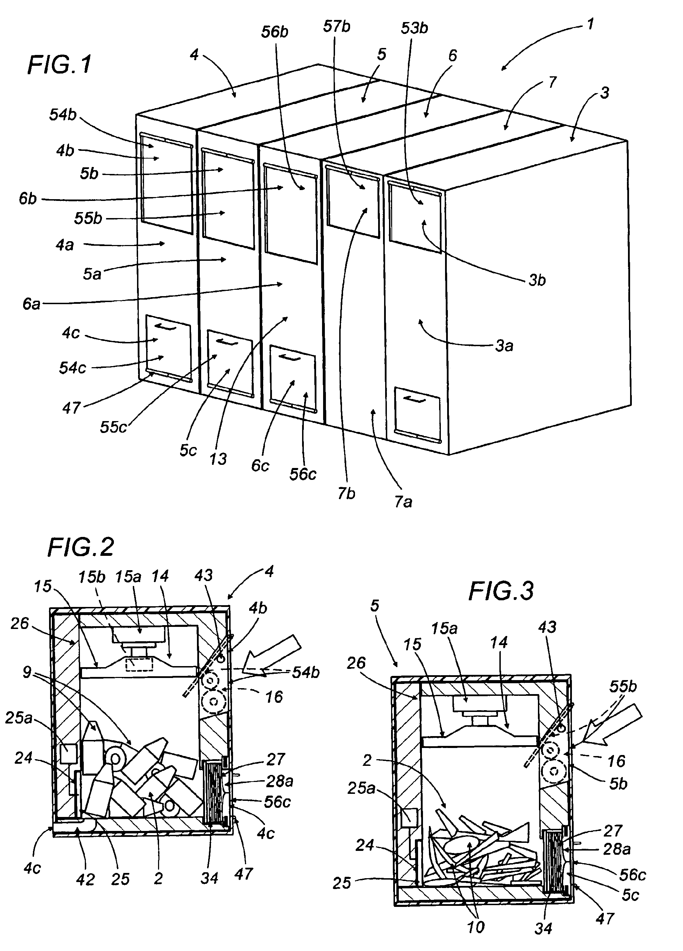

With reference to the accompanying drawings, in particular Figure 1, the numeral 1 denotes in its entirety a unit for separately collecting urban waste 2.

In the embodiment illustrated by way of example, the unit 1 comprises five substantially box-shaped containers 3, 4, 5, 6 and 7, each designed to receive a different type of waste 2.

More specifically, these containers are designed to receive glass 8, plastic 9, paper 10, dry waste 11 and wet waste 12, respectively.

The containers 3, 4, 5, 6 and 7 have respective front walls 3a, 4a, 5a, 6a and 7a which together form a front wall 13 of the unit 1.

The front walls of the containers 3, 4, 5, 6 and 7 have respective inlets 3b, 4b, 5b, 6b and 7b which place the inside of the containers in communication with the outside environment, allowing the waste 2 to be introduced into them.

The inlets 3b, 4b, 5b, 6b and 7b are closed by respective doors 53b, 54b, 55b, 56b and 57b, each hinged at the top of the respective container and mobile between a closed position illustrated in Figure 1 and an open position, illustrated for each of the containers 4, 5, 6, 7 and 3 by a dashed line in Figures 2 to 6, respectively.

Each of the containers 3, 4, 5, 6 and 7 houses compacting means 14 designed to reduce the volume of the waste 2 inside it.

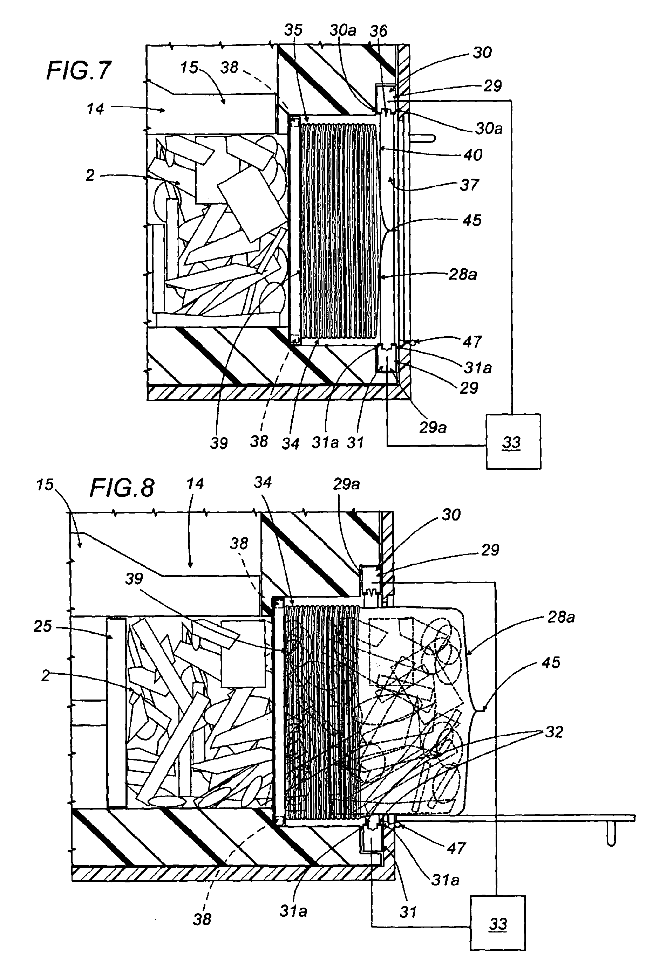

In particular, in the case of plastic 9, paper 10 and dry waste 11, the means 14 consist of a press 15 which, in the embodiment described with reference to Figures 2, 3 and 4, moves vertically between a rest position and working position, illustrated in Figures 7, 8 and 9, in which the waste 2 is compacted. The press 15, driven by customary drive means 15a, is not described in further detail since it may be of any suitable known type.

With reference in particular to Figures 2 and 3, the work of the presses 15 in the containers 4 and 5 may be facilitated by a shredding system 16, mounted at the respective inlets 4b and 5b and designed to cut the plastic 9 or the paper 10 into smaller pieces when it is placed in the respective container 4 or 5.

These shredding systems 16 may be of any suitable known type, fitted in each container, preferably equipped with cutting elements and not further described since they do not form part of the subject matter of this invention.

In the case of the container 4 for plastic 9, the press 15 may also be equipped with a customary heater 15b for retaining the deformation of the plastic 9 so that it does not tend to return to its original shape when the press 15 returns to the rest position.

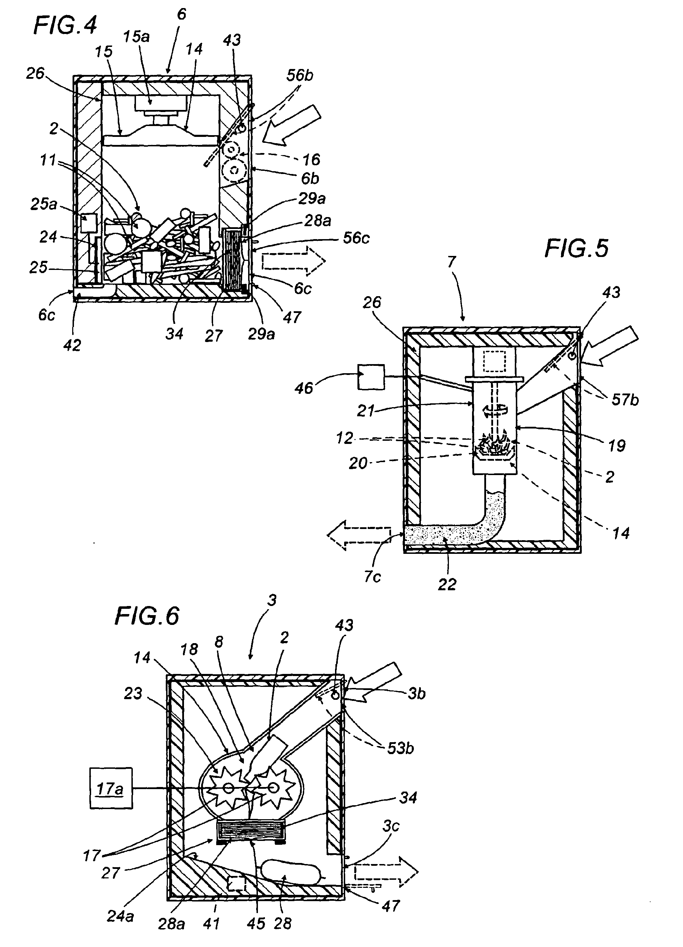

As shown in Figure 6, the compacting means 14 in the case of glass 8 consist of a crusher unit 23 comprising, in the embodiment illustrated by way of example, a pair of customary grinders 17, driven by a motor 17a, which are not described in detail and which break up the glass 8 introduced through the inlet 3b.

Looking in more detail, the container 3 for glass 8 includes a compartment 18 that houses the grinders 17 and communicates with the inlet 3b of the container 3 for receiving the glass 8.

Advantageously, in embodiments that are not illustrated, the compacting means 14 for the glass 8 may be of any type suitable for crushing the glass 8 introduced into the container 3.

Similarly, with reference in particular to Figure 5, the container 7 for the wet waste 12 also includes an internal compartment 19 which houses the compacting means 14 for the waste 12.

The means 14 comprise at least one blade 20, which may be of any shape in embodiments that are not illustrated and which may be associated with other blades, to chop up the wet waste 12 inside the container 7, and, more specifically, inside the compartment 19. The compartment 19 is also equipped with a cleaning device 21 for cleaning the compartment 19 itself and operated by a solenoid valve 46 that is schematically illustrated in Figure 5.

The containers 3, 4, 5, 6 and 7 also have respective outlets 3c, 4c, 5c, 6c and 7c through which the waste 2 is unloaded for disposal.

In the case of the container 7 for wet waste 12, the outlet 7c communicates with the compartment 19 through an unloading duct 22 through which the chopped waste 12 can be expelled, for example, into a sewer or cesspool, outside the container 7.

With reference to Figures 2, 3, 4 and 6, it may be observed that the outlets 3c, 4c, 5c and 6c of the containers 3, 4, 5 and 6 are located on the respective front walls of the containers, under the respective inlets 3b, 4b, 5b and 6b, and are closed, under the normal working conditions illustrated, by respective doors 53c, 54c, 55c and 56c which, in the preferred embodiment illustrated, are bottom-hinged to the respective containers 3, 4, 5 and 6.

Each door 53c, 54c, 55c and 56c is mobile between a closed position, maintained by a customary spring hinge 47 that is not described further, and an open position, shown in Figures 8, 9 and 10 which allows the waste 2 to be removed, as described in more detail below.

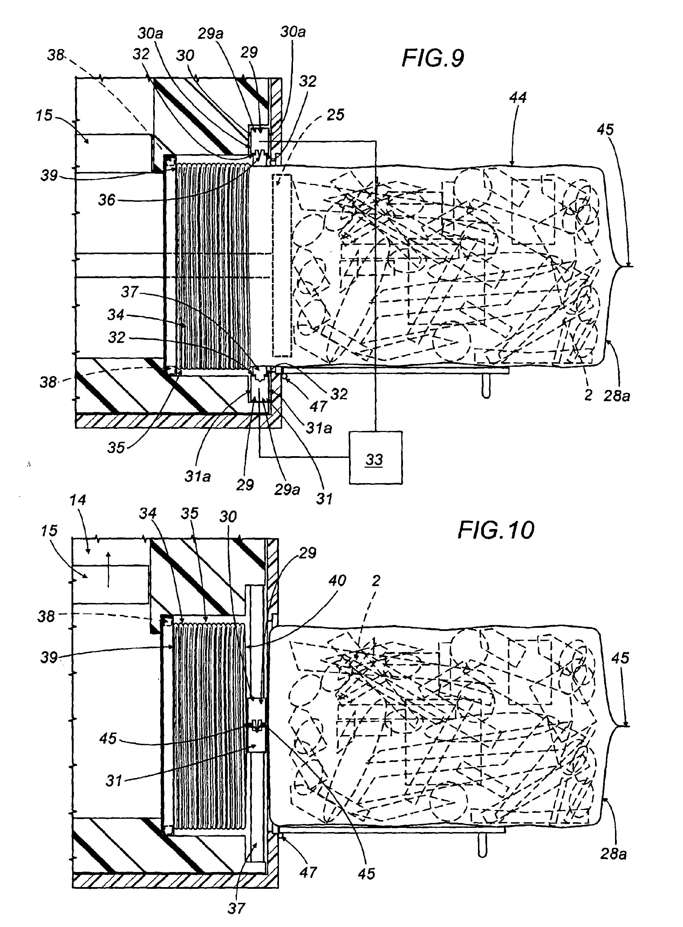

Each of the containers 4, 5 and 6 is also equipped with expulsion means 24 comprising a pusher element 25 that moves between a rest position where it is located, on the inside of the respective container 4, 5 and 6, against a wall 26 opposite the respective front wall 4a, 5a and 6a, and an expulsion position, shown by way of example in Figure 9, where it is substantially aligned with the respective container outlet 4c, 5c and 6c.

In the preferred embodiment illustrated, each pusher element 25 is driven by a customary actuator 25a which imparts the above mentioned movement to the pusher element 25 using well-known mechanisms.

In the container 3, the expulsion means 24 comprise an inclined surface 24a.

With reference to Figures 2, 3, 4 and 6, it may be observed that each of the containers 3, 4, 5 and 6 comprises a collector unit 27 designed to make a pack 28, shown in more detail in Figures 6 and 10, for the waste 2 as described below.

Looking in more detail, with reference to Figures 7, 8, 9 and 10, it may be observed that the collector unit 27 comprises a sealer 29, constituting a device 29a for closing the pack 28, consisting of a first part 30 and a second part 31, each fork-shaped, with respective teeth 30a and 31a located opposite each other to define two sealing lines 32.

The first and second parts 30 and 31 move towards and away from each other, under the action, for example, of a customary actuator 33, between an open position, shown in Figures 7, 8 and 9, and a closed sealing position shown in Figure 10.

The collector unit 27 also comprises a cartridge 34 of tube 35, preferably heat-sealable, gathered up in concertina fashion and located in the vicinity of the sealer 29. The tube 35 may be of any size suitable for the unit 1 and for the type of waste 2 it is to be used for.

The collector unit 27 further comprises a knife 36, positioned between the teeth 30a of the first part 30 of the sealer 29 and mobile with it to cut the tube 35 and define the pack 28, as described in more detail below. The knife 36 has a matching contact guide 37 on the second part 31 of the sealer 29.

In embodiments that are not illustrated, the second part 31 might take the form of a substantially parallelepiped shaped plate including the guide 37 to match the knife 36.

Looking in more detail at the containers 4, 5 and 6, the cartridge 34 is releasably attached to the container at the respective outlets 4c, 5c and 6c through hooking elements 38 shown as a dashed line in Figures 7 to 10. More specifically, a first end 39 of the tube 35 is attached to the container by means of the cartridge 34, whilst a second end 40 of the tube 35 is placed between the first and second parts 30 and 31 of the respective sealer 29, also supported by the container.

In the container 3, the collector unit 27 is located near the crushing unit 23 and, more specifically, as shown in Figure 6, is positioned under the grinders 17 with the tube 35 in communication with the compartment 18, the sealer 29 and the cartridge 34 being supported by the container 3 itself.

The container 3 also comprises a sensor 41 located under the inclined surface 24a and designed to check the weight of the pack 28 filled with glass 8, as explained below.

It should be noticed that in the case of glass 8, the pack 28 is moved to the outlet 3c after being filled and sealed.

As shown in Figures 2 and 4, the containers 4 and 6 may be equipped with an outlet 42 to drain off any liquids that may be present in the waste 2 when it is introduced into the containers 4 and 6.

Each of the containers 3, 4, 5, 6 and 7 may also comprise a sensor 43 located at the respective inlets 3b, 4b, 5b, 6b and 7b and designed to detect the presence of waste 2 that is not compatible with that established for each specific container, according to known methods not described.

During use, the waste 2 is introduced into one of the containers 3, 4, 5, 6 and 7 of the unit 1 depending on the type of waste 2.

Wet waste 12 is chopped by the blade 20 and expelled from the container 7 through the duct 22.

Preferably, every time the blades 20 are used, the interior of the container 7 is cleaned with water supplied by the device 21 controlled, for example, by the above mentioned solenoid valve 46.

Advantageously, these operations may be performed automatically by the system or manually by the user operating customary controls which are not illustrated or described.

In the containers 4 and 5, the respective shredding systems 16 cut the waste paper 10 and plastic 9 into smaller pieces more suitable for subsequent compression by the respective presses 15.

With reference to Figures 7, 8, 9 and 10, the outgoing waste 2 is placed in a sealed pack 28 upon being expelled from the container, in the case of plastic 9, paper 10 or dry waste 11, or upon being crushed in the case of glass 8.

Looking in more detail, in the case of plastic 9, paper 10 and dry waste 11, after being pressed with the press 15 in the aforementioned working position, that is to say, lowered in the drawings, and the end 40 of the tube 35 sealed to form a bottom 28a of the pack 28, in such a way as to substantially occlude the outlets 4c, 5c, and 6c, the expulsion means 24 push the waste 2 towards the respective outlets where the doors 53c, 54c, 55c and 56c are in the open position and support the outgoing waste 2, at least partially.

The compacted waste materials 2 enter the tube 35 causing a portion 44 of it to unfold to form what will later become the pack 28. At this stage, the first part 30 and the second part 31 of the sealer 29 are in the aforementioned open position.

After filling the portion 44 of tube 35, the pusher element 25 returns to the rest position and the parts 30 and 31 of the sealer 29 move towards each other in such a way as to compress the tube 35. At the same time, two seals 45 are made along the sealing lines 32 and the tube is cut along a line parallel with and between the seals 45.

More specifically, one of the seals 45 closes the full pack 28 and the other forms the bottom 28a of the next pack 28. The knife 36 cuts the portion of the tube 35 between the two sealing lines 32, thus separating the pack 28, filled with the waste 2, from the rest of the tube 35.

In the case of glass 8, the pack 28 is made by the sealer 29 in a manner very similar to that just described, the difference being that the pack 28 is not filled by the expulsion means 24 but by gravity as the pieces of crushed glass 8 fall out of the compartment 18. The sensor 41, according to known methods, activates the sealer 29 when the pack 28 being filled reaches a predetermined size. The pack 28 containing the waste glass 8 remains near the outlet 3c from where it can be removed.

Advantageously, the cartridge 34 can be easily changed when the tube 35 is finished.

The tube 35 may be made of any suitable material treated so that it can be sealed in the manner described. In particular, in the case of paper 10, the tube 35 itself may be made of paper so that it can be disposed of together with its contents.

In embodiments that are not illustrated, the container 7 for wet waste 12 may also be equipped with a collector unit 27 similar to the one described above, where, for example, there is no sewer or cesspool near at hand for disposal of the waste.

The invention achieves the aforementioned aims and, in particular, provides a user of the unit 1 with sealed packs 28 fed out of the unit 1 and each containing a different type of waste 2.

Thus, each container is extremely easy to unload, without the risk of spilling the waste 2 which is conveniently bagged for easy transportation.

The invention described has evident industrial applications and can be modified in several ways without thereby departing from the scope of the inventive concept. Moreover, all the details of the invention may be substituted by technically equivalent elements.

## Claims

1. Unit (1) for separately collecting urban waste, (2) comprising a plurality of containers (3, 4, 5, 6, 7) each used to receive a different type of waste (2) and equipped with means (14) for compacting the waste (2) in order to reduce its volume, each of the containers (3, 4, 5, 6, 7) comprising expulsion means (24) for expelling the waste (2) through a respective outlet (3c, 4c, 5c, 6c, 7c) made in each container (3, 4, 5, 6, 7) after the waste (2) has been compacted by the compacting means (14), the unit being **characterised in that** each of the containers (3, 4, 5, 6, 7) comprises a unit (27) for collecting the waste (2) to form a pack (28) containing the waste (2) when it is expelled.

2. The unit according to claim 1, **characterised in that** each of the containers (3, 4, 5, 6, 7) comprises a unit (27) for collecting the waste (2) located at the outlet (3c, 4c, 5c, 6c, 7c) and operating in conjunction with the expulsion means (24) to form the pack (28).

3. The unit according to claim 1**, characterised in that** the collector unit (27) is located at the compacting means (14) and operates in conjunction with the latter to form the pack (28).

4. The unit according to claim 1**, characterised in that** the collector unit (27) comprises a device (29a) for sealing the pack (28).

5. The unit according to claim 4**, characterised in that** the sealing device (29a) is designed to form a bottom (28a) of the pack (28).

6. The unit according to claim 5**, characterised in that** the sealing device (29a) comprises a sealer (29).

7. The unit according to claim 6, **characterised in that** the sealer (29) comprises a first and a second fork-shaped part (30) and (31) that move towards and away from each other between an open position and a closed position where the teeth (30a) of the first part (30) and the teeth (31a) of the second part (31) define two sealing lines (32).

8. The unit according to claim 7, **characterised in that** the collector unit (27) comprises a cartridge (34) of tube (35) gathered up in concertina fashion in the cartridge (34), the tube (35) having a first end (39) attached to the cartridge (34) and a second end (40) placed between the first and second parts (30, 31) of the sealer (29), the tube (35) being designed to form the pack (28).

9. The unit according to claim 8, **characterised in that** the cartridge (34) is releasably attached to the respective container (3, 4, 5, 6).

10. The unit according to claim 9, **characterised in that** the collector unit (27) comprises a knife (36) located between the teeth (30a) to cut the tube (35) in such a way as to separate the pack (28) from the tube (35) itself.

11. The unit according to claim 1, **characterised in that** the expulsion means (24) comprise a pusher element (25) that moves between a rest position where it is located, on the inside of the each container (3, 4, 5, 6, 7) against a wall (26) respectively opposite each of the outlets (3c, 4c, 5c, 6c, 7c) and an expulsion position, where it substantially faces the respective outlet (3c, 4c, 5c, 6c, 7c) of each container (3, 4, 5, 6, 7).

12. The unit according to claim 1, **characterised in that** the expulsion means (24) comprise an inclined surface (24a).

13. The unit according to claim 12, **characterised in that** the inclined surface (24a) comprises a sensor (41) for detecting the weight of the pack (28) containing the waste (2).

14. The unit according to claim 1, **characterised in that** the compacting means (14) comprise a press (15) that moves between a rest position and a working position where the waste (2) is compacted.

15. The unit according to claim 14, **characterised in that** the press (15) comprises a heater (15b).

16. The unit according to claim 1, **characterised in that** the compacting means (14) of at least one of the containers (3, 4, 5, 6, 7) comprise at least one chopping blade (20); at least one of the containers (3, 4, 5, 6, 7) being designed to collect wet waste (12).

17. The unit according to claim 16, **characterised in that** the expulsion means (24) comprise an unloading duct (22) for the chopped wet waste (12).

18. The unit according to claim 17, **characterised in that** it comprises a cleaning device (21) that is activated when the wet waste (12) is expelled.

19. The unit according to claim 1, **characterised in that** the compacting means (14) of at least one of the containers (3, 4, 5, 6, 7) comprise a crusher unit (23); at least one of the containers (3, 4, 5, 6, 7) being designed to collect glass (8).

20. The unit according to claim 19, **characterised in that** the crusher unit (23) comprises at least two grinders (17).

21. The unit according to claim 1, **characterised in that** it comprises, for each of the containers (3, 4, 5, 6, 7), a sensor (43) located at the respective inlets (3b, 4b, 5b, 6b, 7b) of the containers (3, 4, 5, 6, 7) and designed to detect the type of waste (2).

22. The unit according to claim 1, **characterised in that** it comprises a shredding system (16) located at the inlet (3b, 4b, 5b, 6b, 7b) of at least one of the containers (3, 4, 5, 6, 7) designed to shred the waste (2) after the latter has been placed in the container (3, 4, 5, 6, 7) and before being operated on by the compacting means (14).

## Patentansprüche

1. Einheit (1) zum getrennten Sammeln von Stadtabfällen (2), bestehend aus mehreren Behältern (3, 4, 5, 6, 7), von denen jeder dazu dient, einen verschiedene Art von Abfall (2) aufzunehmen, und jeder mit Mitteln (14) zum Verdichten des Abfalls (2) ausgestattet ist, um dessen Volumen zu verringern, wobei jeder der Behälter (3, 4, 5, 6, 7) mit Ausstoßmitteln (24) ausgerüstet ist, die dazu dienen, den Abfall (2) über eine entsprechende Auslassöffnung (3c, 4c, 5c, 6c, 7c) auszuschieben, die in jedem Behälter (3, 4, 5, 6, 7) vorgesehen ist, nachdem der Abfall (2) durch die Verdichtungsmittel (14) verdichtet wurde, wobei die Einheit **dadurch gekennzeichnet ist, dass** jeder der Behälter (3, 4, 5, 6, 7) eine Einheit (27) zum Sammeln des Abfalls (2) beinhaltet, um eine Packung (28) zu bilden, die den Abfall (2) enthält, wenn dieser ausgestoßen wird.

2. Einheit nach Anspruch 1, **dadurch gekennzeichnet, dass** jeder der Behälter (3, 4, 5, 6, 7) eine Einheit (27) zum Sammeln des Abfalls (2) beinhaltet, die an der Auslassöffnung (3c, 4c, 5c, 6c, 7c) angeordnet ist und mit den Ausstoßmitteln (24) zusammenwirkt, um die Packung (28) zu bilden.

3. Einheit nach Anspruch 1, **dadurch gekennzeichnet, dass** die Sammeleinheit (27) bei den Verdichtungsmitteln (14) angeordnet ist und mit den letztgenannten zusammenwirkt, um die Packung (28) zu bilden.

4. Einheit nach Anspruch 1, **dadurch gekennzeichnet, dass** die Sammeleinheit (27) eine Vorrichtung (29a) zum Verschließen der Packung (28) beinhaltet.

5. Einheit nach Anspruch 4, **dadurch gekennzeichnet, dass** die Verschließvorrichtung (29a) dafür ausgelegt ist, einen Boden (28a) der Packung (28) zu bilden.

6. Einheit nach Anspruch 5, **dadurch gekennzeichnet, dass** die Verschließvorrichtung (29a) eine Siegeleinrichtung (29) beinhaltet.

7. Einheit nach Anspruch 6, **dadurch gekennzeichnet, dass** die Siegeleinrichtung (29) aus einem ersten und einem zweiten gabelförmigen Teil (30) und (31) besteht, die im Verhältnis zueinander beweglich sind zwischen einer geöffneten Stellung und einer geschlossenen Stellung, in der die Zähne (30a) des ersten Teils (30) und die Zähne (31a) des zweiten Teils (31) zwei Versiegelungslinien (32) bilden.

8. Einheit nach Anspruch 7, **dadurch gekennzeichnet, dass** die Sammeleinheit (27) eine Kartusche (34) aus Schlauch (35) beinhaltet, der zickzackförmig zusammengefaltet in der Kartusche (34) bevorratet ist, wobei der Schlauch (35) ein erstes Ende (39) aufweist, das an der Kartusche (34) befestigt ist, und ein zweites Ende (40) aufweist, das zwischen den ersten und zweiten Teilen (30, 31) der Siegeleinrichtung (29) angeordnet ist, wobei der Schlauch (35) dazu dient, die Packung (28) zu bilden.

9. Einheit nach Anspruch 8, **dadurch gekennzeichnet, dass** die Kartusche (34) lösbar an dem entsprechenden Behälter (3, 4, 5, 6) angebracht ist.

10. Einheit nach Anspruch 9, **dadurch gekennzeichnet, dass** die Sammeleinheit (27) ein Messer (36) beinhaltet, das zwischen den Zähnen (30a) angeordnet ist, um den Schlauch (35) so abzuschneiden, dass die Packung (28) vom restlichen Schlauch (35) getrennt wird.

11. Einheit nach Anspruch 1, **dadurch gekennzeichnet, dass** die Ausstoßmittel (24) ein Schieberelement (25) beinhalten, das beweglich ist zwischen einer Ruhestellung, in der es im Innern des jeweiligen Behälters (3, 4, 5, 6, 7) gegen eine Wand (26) anliegt, die sich gegenüber den jeweiligen Auslassöffnungen (3c, 4c, 5c, 6c, 7c) befindet, und einer Ausstoßstellung, in der es sich im Wesentlichen an den entsprechenden Auslassöffnungen (3c, 4c, 5c, 6c, 7c) der jeweiligen Behälter (3, 4, 5, 6, 7) zeigt.

12. Einheit nach Anspruch 1, **dadurch gekennzeichnet, dass** die Ausstoßmittel (24) eine geneigte Oberfläche (24a) aufweisen.

13. Einheit nach Anspruch 12, **dadurch gekennzeichnet, dass** die geneigte Oberfläche (24a) einen Sensor (41) beinhaltet, der zur Erfassung des Gewichts der Packung (28) dient, die den Abfall (2) enthält.

14. Einheit nach Anspruch 1, **dadurch gekennzeichnet, dass** die Verdichtungsmittel (14) eine Presse (15) beinhalten, die beweglich ist zwischen einer Ruhestellung und einer Arbeitsstellung, in der die Verdichtung des Abfalls (2) erfolgt.

15. Einheit nach Anspruch 14, **dadurch gekennzeichnet, dass** die Presse (15) ein Heizelement (15b) beinhaltet.

16. Einheit nach Anspruch 1, **dadurch gekennzeichnet, dass** die Verdichtungsmittel (14) mindestens eines der Behälter (3, 4, 5, 6, 7) zumindest ein Zerkleinerungsmesser (20) beinhalten; wobei mindestens einer der Behälter (3, 4, 5, 6, 7) zum Sammeln von Nassabfällen (12) dient.

17. Einheit nach Anspruch 16, **dadurch gekennzeichnet, dass** die Ausstoßmittel (24) einen Ausgabekanal (22) für die zerkleinerten Nassabfälle (12) beinhalten.

18. Einheit nach Anspruch 17, **dadurch gekennzeichnet, dass** sie eine Reinigungsvorrichtung (21) beinhaltet, die beim Ausstoßen der Nassabfälle (12) aktiviert wird.

19. Einheit nach Anspruch 1, **dadurch gekennzeichnet, dass** die Verdichtungsmittel (14) mindestens eines der Behälter (3, 4, 5, 6, 7) eine Brechereinheit (23) beinhalten; wobei mindestens einer der Behälter (3, 4, 5, 6, 7) zum Sammeln von Glas (8) dient.

20. Einheit nach Anspruch 19, **dadurch gekennzeichnet, dass** die Brechereinheit (23) zumindest zwei Mahleinrichtungen (17) beinhaltet.

21. Einheit nach Anspruch 1, **dadurch gekennzeichnet, dass** sie für jeden der Behälter (3, 4, 5, 6, 7) einen Sensor (43) beinhaltet, der an den jeweiligen Einlassöffnungen (3b, 4b, 5b, 6b, 7b) der Behälter (3, 4, 5, 6, 7) angeordnet und zur Erkennung der Art des Abfalls (2) bestimmt ist.

22. Einheit nach Anspruch 1, **dadurch gekennzeichnet, dass** sie ein Schreddersystem (16) beinhaltet, das an der Einlassöffnung (3b, 4b, 5b, 6b, 7b) mindestens eines der Behälter (3, 4, 5, 6, 7) angeordnet ist und dazu dient, den Abfall (2) zu zerkleinern, nachdem dieser in den Behälter (3, 4, 5, 6, 7) eingegeben wurde und bevor die Verdichtungsmittel (14) auf ihn einwirken.

## Revendications

1. Un dispositif (1) pour collecter séparément des déchets urbains (2), comprenant une pluralité de conteneurs (3, 4, 5, 6, 7) qui sont chacun utilisés pour recevoir un type différent de déchets (2) et sont chacun équipés de moyens (14) servant à compacter les déchets (2) pour en réduire le volume, chacun des conteneurs (3, 4, 5, 6, 7) comprenant des moyens d'expulsion (24) servant à expulser les déchets (2) à travers une sortie (3c, 4c, 5c, 6c, 7c) respective réalisée dans chaque conteneur (3, 4, 5, 6, 7) une fois que les déchets (2) ont été compactés par les moyens de compactage (14), le dispositif étant **caractérisé en ce que** chacun des conteneurs (3, 4, 5, 6, 7) comprend un groupe (27) de collecte des déchets (2) destiné à former un ballot (28) contenant lesdits déchets (2) quand ceux-ci sont expulsés.

2. Le dispositif selon la revendication 1, **caractérisé en ce que** chacun des conteneurs (3, 4, 5, 6, 7) comprend un groupe (27) de collecte des déchets (2) qui est situé au niveau de la sortie (3c, 4c, 5c, 6c, 7c) et qui coopère avec les moyens d'expulsion (24) pour former le ballot (28).

3. Le dispositif selon la revendication 1, **caractérisé en ce que** le groupe (27) de collecte est situé au niveau des moyens de compactage (14) et coopère avec ces derniers pour former le ballot (28).

4. Le dispositif selon la revendication 1, **caractérisé en ce que** le groupe (27) de collecte comprend un dispositif (29a) servant à sceller le ballot (28).

5. Le dispositif selon la revendication 4, **caractérisé en ce que** le dispositif de scellage (29a) est destiné à définir un fond (28a) du ballot (28).

6. Le dispositif selon la revendication 5, **caractérisé en ce que** le dispositif de scellage (29a) comprend un organe de scellage (29).

7. Le dispositif selon la revendication 6, **caractérisé en ce que** l'organe de scellage (29) comprend une première et une deuxième parties (30) et (31), en forme de fourche, qui se rapprochent et s'éloignent réciproquement entre une position ouverte et une position fermée dans laquelle les dents (30a) de la première partie (30) et les dents (31a) de la deuxième partie (31) définissent deux lignes de scellage (32).

8. Le dispositif selon la revendication 7, **caractérisé en ce que** le groupe (27) de collecte comprend une cartouche (34) de tube (35) ramassé en accordéon dans ladite cartouche (34), le tube (35) ayant une première extrémité (39) fixée à la cartouche (34) et une deuxième extrémité (40) placée entre les première et deuxième parties (30, 31) de l'organe de scellage (29), le tube (35) étant destiné à constituer le ballot (28).

9. Le dispositif selon la revendication 8, **caractérisé en ce que** la cartouche (34) est fixée de manière amovible au conteneur (3, 4, 5, 6) respectif.

10. Le dispositif selon la revendication 9, **caractérisé en ce que** le groupe (27) de collecte comprend un couteau (36), situé entre les dents (30a), pour couper le tube (35) et séparer ainsi le ballot (28) du tube (35) lui-même.

11. Le dispositif selon la revendication 1, **caractérisé en ce que** les moyens d'expulsion (24) comprennent un élément pousseur (25) qui est mobile entre une position de repos dans laquelle, à l'intérieur de chaque conteneur (3, 4, 5, 6, 7), il est accolé contre une paroi (26) respectivement opposée à chacune des sorties (3c, 4c, 5c, 6c, 7c), et une position d'expulsion, dans laquelle il est essentiellement en face de la sortie (3c, 4c, 5c, 6c, 7c) respective de chaque conteneur (3, 4, 5, 6, 7).

12. Le dispositif selon la revendication 1, **caractérisé en ce que** les moyens d'expulsion (24) comprennent un plan incliné (24a).

13. Le dispositif selon la revendication 12, **caractérisé en ce que** le plan incliné (24a) comprend un capteur (41) servant à détecter le poids du ballot (28) contenant les déchets (2).

14. Le dispositif selon la revendication 1, **caractérisé en ce que** les moyens de compactage (14) comprennent une presse (15) qui est mobile entre une position de repos et une position de travail dans laquelle les déchets (2) sont compactés.

15. Le dispositif selon la revendication 14, **caractérisé en ce que** la presse (15) comprend un réchauffeur (15b).

16. Le dispositif selon la revendication 1, **caractérisé en ce que** les moyens de compactage (14) d'au moins un des conteneurs (3, 4, 5, 6, 7) comprennent au moins une lame de hachage (20) ; au moins un des conteneurs (3, 4, 5, 6, 7) étant destiné à collecter des déchets humides (12).

17. Le dispositif selon la revendication 16, **caractérisé en ce que** les moyens d'expulsion (24) comprennent un conduit d'évacuation (22) pour les déchets humides (12) hachés.

18. Le dispositif selon la revendication 17, **caractérisé en ce qu'**il comprend un système de nettoyage (21) qui est activé lorsque les déchets humides (12) sont expulsés.

19. Le dispositif selon la revendication 1, **caractérisé en ce que** les moyens de compactage (14) d'au moins un des conteneurs (3, 4, 5, 6, 7) comprennent un groupe de broyage (23) ; au moins un des conteneurs (3, 4, 5, 6, 7) étant destiné à collecter du verre (8).

20. Le dispositif selon la revendication 19, **caractérisé en ce que** le groupe de broyage (23) comprend au moins deux meules (17).

21. Le dispositif selon la revendication 1, **caractérisé en ce qu'**il comprend, pour chacun des conteneurs (3, 4, 5, 6, 7), un capteur (43) situé au niveau des entrées (3b, 4b, 5b, 6b, 7b) respectives desdits conteneurs (3, 4, 5, 6, 7) et destiné à détecter le type des déchets (2).

22. Le dispositif selon la revendication 1, **caractérisé en ce qu'**il comprend un système de déchiquetage (16) situé au niveau de l'entrée (3b, 4b, 5b, 6b, 7b) d'au moins un des conteneurs (3, 4, 5, 6, 7) et destiné à déchiqueter les déchets (2) après leur introduction dans le conteneur (3, 4, 5, 6, 7) et avant d'être soumis à l'action des moyens de compactage (14).
